# FASCICULE DE BREVET EUROPEEN

(11) **EP 0 519 104 B1**
(45) Date de publication et mention de la délivrance du brevet: **06.12.1995**
(21) Numéro de dépôt: 91110137.6
(22) Date de dépôt: 21.06.1991
(51) Int. Cl.: A23L 1/0522, A23L 1/187, A23L 1/035

(54) **Gel obtenu par complexation d'amidon par un émulsifiant**
Gel erhalten durch Komplexierung von Stärke und Emulgator
Gel obtained by complexing starch and an emulsifier

(43) Date de publication de la demande: 23.12.1992
(73) Titulaire: SOCIETE DES PRODUITS NESTLE S.A., 1800 Vevey (CH)
(72) Inventeur: Conde-Petit, Béatrice, CH-8092 Zürich (CH); Escher, Felix, CH-8092 Zürich (CH)

(56) Documents cités:
- EP-A- 0 011 479
- EP-A- 0 076 381
- EP-A- 0 118 753
- DE-A- 2 159 433
- FR-A- 1 446 263
- US-A- 2 749 244
- FOOD SCIENCE & TECHNOLOGY ABSTRACTS, 1979, Internatl. Food Information Service; C. TU, AN 79-12-M1341

## Description

La présente invention a pour objet un procédé de préparation d'un gel, notamment d'un gel alimentaire, ainsi que le gel obtenu par ce procédé.

On connaît divers procédés de modification d'amidons faisant intervenir leur complexation avec un émulsifiant dans le but d'améliorer leur dispersibilité ou leur pouvoir épaississant, par exemple.

C'est ainsi que US 4491483 (Dudacek et al.) propose un amidon facilement dispersable dans l'eau bouillante, obtenu par traitement d'un amidon natif à 50-120°C en présence de 10-40% d'eau et d'au moins 0,25%, sur poids d'amidon, d'émulsifiant, et séchage, les conditions précises de ce traitement à l'humidité et à la chaleur étant choisies de manière à ne pas gélatiniser l'amidon. L'effet d'un tel traitement est d'élever la température de gélatinisation de l'amidon et d'éviter ainsi la formation de grumeaux lorsqu'on le disperse dans l'eau bouillante.

FR 2629684 (INRA) propose un produit amylacé facilement dispersable dans l'eau aussi bien froide que chaude ou bouillante, obtenu par traitement aux microondes d'un milieu contenant un amidon natif, 30-50% d'eau et éventuellement 3% au plus, sur poids d'amidon, d'un agent complexant l'amylose, granulation de la pâte ainsi obtenue et séchage. Le traitement aux microondes est conduit à 50-98°C durant 30 s - 15 min jusqu'à gélatinisation d'au moins 50% de l'amidon. La matière amylacée ainsi obtenue peut être utilisée pour ses propriétés liantes dans la confection de plats cuisinés, charcuterie et sauces, par exemple.

EP 11479 (General Foods) propose un procédé de préparation d'un amidon modifié prégélatinisé utilisable pour la confection de puddings instantanés, dans lequel on ajoute du stearoyl-lactyl-2-lactate de sodium ou calcium et/ou une combinaison d'une protéine et d'un émulsifiant à une dispersion aqueuse d'amidon natif, et dans lequel soit on chauffe et sèche directement sur rouleaux une dispersion à 20-40% de matière sèche, soit on chauffe avec un échangeur de chaleur à surface raclée une dispersion à moins de 10%, par exemple 7,2% de matière sèche et l'on sèche par pulvérisation.

Dans la variante du procédé selon EP 11479 où l'on utilise un séchoir à rouleaux, on chauffe les rouleaux avec une vapeur à 3-11 bar et on les fait tourner à quelques tours/min. Dans la variante où l'on utilise un échangeur de chaleur à surface raclée, la dispersion est de préférence préchauffée juste en-dessous de la température de gélatinisation de l'amidon, par exemple à 65-70°C pour le tapioca, pour augmenter cette température de gélatinisation, puis chauffée à 80-90°C durant un temps suffisant pour gélatiniser complètement l'amidon.

La forme de réalisation du procédé selon EP 11479 dans laquelle on n'ajoute que du stearoyl-lactyl-2-lactate de sodium ou calcium permet d'obtenir un amidon modifié prégélatinisé qui exerce le même effet épaississant qu'un amidon prégélatinisé non modifié. La modification proprement dite donne au pudding reconstitué une texture plus douce et plus crémeuse ainsi qu'un aspect plus brillant.

On connaît également diverses poudres pour gels alimentaires du type desserts instantanés ou à cuire, qui comprennent de l'amidon, en tant qu'agent épaississant, et un émulsifiant, en tant qu'agent lissant la texture du dessert reconstitué.

C'est ainsi que US 3917875 (Gardiner) décrit une poudre pour dessert instantané du type yogourt, qui comprend du sucre, de la gélatine, un agent stabilisant tel qu'une gomme, un acide alimentaire, de l'amidon prégélatinisé et, optionnellement, un émulsifiant et/ou des agents colorant et aromatisant.

De même, US 4262031 (Carpenter et al.) décrit une poudre pour pudding à cuire, qui comprend du sucre, de l'amidon non gélatinisé, notamment de l'amidon natif de maïs, de la poudre de cacao fortement alcalinisée, un agent acidifiant et, optionnellement, un émulsifiant et/ou un agent stabilisant tel qu'une gomme.

DE-A-2159433 (General Foods) décrit un pudding congelé comprenant 45-70% d'eau, 10-20% de sucre, 3-12% de graisse végétale émulsifiée avec 0,1-1% d'émulsifiant, 3-12% de solides du lait et 3-10% d'amidon de tapioca gélatinisé, ce pudding étant capable de traverser plusieurs fois, par congélation et décongélation, le domaine de température compris entre moins de -9,4°C et 24°C sans que sa texture se détériore par synérèse.

La présente invention a pour but de proposer un gel, notamment un gel alimentaire, à faible concentration en amidon complexé avec un émulsifiant, qui présente une texture particulièrement courte, autrement dit qui se distingue par son élasticité, par opposition à sa viscosité.

La présente invention a également pour but de proposer un procédé de préparation d'un tel gel à partir d'une solution aqueuse à faible concentration en amidon.

A cet effet, le gel selon la présente invention contient 1-5% en poids d'amidon présentant une teneur notable en amylose complexe à un degré de 90-100% avec 1-8%, sur poids d'amidon, d'un emulsifiant susceptible de complexer l'amylose, et il présente un module conservatif G' de 5-50 Nm⁻² ainsi qu'un module dissipatif G'' de 1-10 Nm⁻².

De même, dans le procédé de préparation d'un tel gel selon la présente invention, on prépare un mélange aqueux contenant tous les ingrédients devant entrer dans la composition du gel, dont ledit émulsifiant en dispersion et ledit amidon gélatinisé dans des conditions permettant de libérer une quantité d'amylose telle qu'il présente un pouvoir de liaison de l'iode de 3,3-4,7%, on complexe à chaud cette amylose avec l'émulsifiant, et l'on fait prendre le mélange par refroidissement.

On a constaté qu'il était effectivement possible de préparer ainsi des gels à faible concentration en amidon présentant une texture remarquable due à une augmentation de leur élasticité par rapport à leur viscosité grâce à une complexation avec un émulsifiant de l'amylose libérée.

On a constaté en particulier que la formation de ces gels est due à une complexation par inclusion des molécules d'émulsifiant dans des molécules d'amylose qui prennent une configuration hélicoïdale. Ce type de complexation est décrit par M. A.Rutschmann, par exemple, dans sa dissertation publiée en 1987 à L'Ecole Polytechnique Fédérale de Zurich sous le No 8413.

Dans le présent exposé, la texture des gels est définie par l'intermédiaire des paramètres "module conservatif" G', caractérisant l'élasticité, et "module dissipatif" G'', caractérisant la viscosité. Ces paramètres sont déterminés en régime harmonique. L'échantillon est soumis à une sollicitation ou déformation sinusoïdale à une fréquence déterminée en fonction du temps. On mesure la contrainte de cisaillement correspondante, elle-même sinusoïdale mais présentant un décalage de phase compris entre les extrêmes zéro (texture purement élastique) et π/2 (texture purement visqueuse). Un décalage de phase intermédiaire présente une composante élastique, à savoir le module conservatif G', et une composante visqueuse, à savoir le module dissipatif G''. Dans le cadre du présent exposé, ces modules sont déterminés à l'aide d'un rhéomètre à tension constante utilisant un dispositif de mesure formé d'un cône tournant sur une plaque, cône et plaque ayant un diamètre de 6 cm et l'angle entre cône et plaque étant de 2°. Les mesures sont faites à 25°C, à une fréquence d'oscillation du cône autour de son axe de 2 Hz, sous un couple situé dans un domaine de viscoélasticité linéaire compris entre environ 0,01 et 0,1 Nm.

Un pouvoir de liaison de l'iode est déterminé par titration ampérométrique de l'iode selon la méthode décrite par R.Wyler dans sa dissertation publiée en 1979 à l'Ecole Polytechnique Fédérale de Zurich sous le No 6514.

Les mesures sont faites à une tension et à un courant de polarisation de 140 mV et 2mA, à température ambiante, sur des échantillons de solution de titration iode/potassium 0,01 N de 15 ml, et à un débit goutte à goutte de 0,4 ml/min. Le pouvoir de liaison de l'iode est défini comme le quotient de la quantité d'iode lié sur la quantité d'amidon totale multiplié par cent.

Un degré de complexation est défini comme le quotient de la différence entre le pouvoir de liaison de l'iode de l'amidon et le pouvoir de liaison de l'iode du complexe sur le pouvoir de liaison de l'iode de l'amidon multiplié par cent.

L'expression "à faible concentration en amidon" signifie présentant une faible teneur en amidon, à savoir une teneur de environ un à quelques % en poids d'amidon. Un amidon natif présentant généralement une certaine teneur en eau, de environ 7-15% par exemple, on peut préciser que des "% en poids d'amidon" sont à comprendre ici comme des % en poids de matière sèche d'amidon.

C'est ainsi que le gel selon la présente invention contient 1-5% en poids dudit amidon et 1-8%, sur poids d'amidon, dudit émulsifiant.

Ledit amidon doit présenter une teneur notable en amylose. Ceci signifie qu'un amidon connu pour être composé pratiquement exclusivement d'amylopectine, comme l'amidon connu sous la dénomination anglaise de "waxy maize" (amidon cireux, 1% d'amylose), par exemple, ne conviendrait pas. Mais ceci ne signifie pas qu'il faille choisir un amidon exceptionnellement riche en amylose, tel que l'amidon connu sous la dénomination anglaise d'"amylomaize" (amylomaïs, 50-70% d'amylose), par exemple, qui pourrait ne pas convenir non plus.

Des amidons particulièrement recommandables dans le cadre de la présente invention sont les amidons de pommes de terre, tapioca, maïs ordinaire et/ou blé, qui présentent une teneur dite notable en amylose comprise entre environ 15-30% en poids.

Ledit émulsifiant doit être susceptible de former un complexe avec l'amylose. C'est ainsi que la lécithine, par exemple, ne convient pas. Par contre, le glycerol monostearate, le calcium stearoyl-lactyl-2-lactate, le sodium stearoyl-lactyl-2-lactate, le polyoxyethylene-sorbitane-monostearate et/ou le polethylene glycol-monolaurate, par exemple, conviennent particulièrement bien.

La présente invention permet de proposer des gels à l'intention de diverses branches de l'industrie intéressées par ce type de produits, en particulier l'industrie alimentaire, l'industrie cosmétique et l'industrie des vernis et peintures, par exemple.

Dans une forme de réalisation préférée de la présente invention, ledit gel est un gel alimentaire et il peut notamment contenir, en plus dudit amidon complexé, des ingrédients traditionnels dans des desserts du type pudding, tels que des solides du lait, du saccharose et des matières et/ou agents aromatisants et/ou colorant, par exemple.

Pour mettre en oeuvre le procédé selon la présente invention, on prépare donc une solution aqueuse contenant tous les ingrédients devant entrer dans la composition du gel, à savoir ledit amidon, ledit émulsifiant en dispersion et d'autres ingrédients complémentaires éventuels, tels que ceux cités ci-dessus pour la forme de réalisation particulière du type pudding, par exemple.

On peut préparer ladite solution en y ajoutant l'amidon sous forme native, prégélatinisée, ou prétraitée à la chaleur et à l'humidité, par exemple. On peut noter à ce propos que les conditions dans lesquelles on gélatinise l'amidon peuvent être d'autant plus critiques que la concentration en amidon dudit mélange aqueux est plus faible.

Au-dessous de environ 2% en poids, par exemple, il est recommandé de gélatiniser l'amidon dans des conditions permettant de préserver l'intégrité de ses granules tout en laissant sortir une quantité utile d'amylose, autrement dit une quantité adéquate qui permette d'obtenir un gel présentant la texture recherchée. Pour ce faire, on peut gélatiniser l'amidon à 90-98°C durant 2-30 min, tout en brassant délicatement, par exemple. Si l'on gélatinise à moins de 90°C, on court le risque qu'une quantité trop faible d'amylose sorte des granules d'amidon. Si l'on gélatinise à plus de 98°C, on court le risque de faire éclater les granules.

Si au contraire, on gélatinise l'amidon dans des conditions où la probabilité est grande que pratiquement tous les granules éclatent, il est recommandé de prévoir une concentration en amidon dudit mélange aqueux de environ 3% en poids au moins. Une telle probabilité existe notamment lorsqu'on gélatinise l'amidon dans des conditions équivalant à un traitement de stérilisation, à des températures pouvant s'élever jusqu'à environ 125°C, par exemple.

En d'autres termes, lorsque la température de gélatinisation s'élève au-dessus de 98°C, il est recommandé de compenser le fait que des granules puissent éclater en augmentant la concentration en amidon dudit mélange aqueux au-delà de 2%, pour arriver à des concentrations de au moins environ 3% dans des conditions de stérilisation, par exemple.

Quoi qu'il en soit, on gélatinise l'amidon dans des conditions permettant de libérer une quantité d'amylose telle qu'il présente un pouvoir de liaison de l'iode de 3,3-4,7%.

On ajoute l'émulsifiant audit mélange aqueux de manière qu'il s'y trouve en dispersion. Ceci est nécessaire pour que l'émulsifiant soit disponible pour complexer l'amidon, ou plus précisément l'amylose libérée. On ajoute l'émulsifiant au mélange aqueux de manière à pouvoir obtenir un degré de complexation de l'amidon avec l'émulsifiant de 90-100%.

Pour ce faire, on peut soit mettre au préalable l'émulsifiant en dispersion dans un peu d'eau et ajouter la dispersion au mélange, soit mettre directement l'émulsifiant en dispersion dans le mélange, à un pH et à une température adéquate, par exemple. Les conditions de pH et de température adéquates pour mettre un émulsifiant en dispersion aqueuse sont caractéristiques de chaque émulsifiant et sont soit connues de, soit déterminables par l'homme du métier. On peut rappeler ici que le calcium stearoyl-lactyl-2-lactate se laisse mettre en dispersion aqueuse à pH 6-12 et 45-55°C, le glycerol monostearate à pH 6-7 et 66-68°C, et le polyoxyethylene-sorbitane-monostearate à pH 5-12 et 25-80°C, par exemple.

On peut ajouter l'émulsifiant audit mélange, de la manière indiquée ci-dessus, avant, pendant ou après l'opération de gélatinisation de l'amidon. On peut même ajouter l'émulsifiant à l'amidon, notamment en enrober un amidon prégélatinisé ou non, et ajouter le tout audit mélange.

On complexe à chaud ladite amylose sortie des granules avec ledit émulsifiant. Comme évoqué ci-dessus, on complexe l'amylose avec l'émulsifiant de manière que l'amidon présente un degré de complexation de 90-100%. A cet effet, on peut réaliser cette complexation à 70-125°C durant 15 s à 30 min, par exemple.

Les exemples ci-après sont présentés à titre d'illustration du gel et de son procédé de préparation selon la présente invention. Les pourcentages et parties y sont donnés en poids sauf indication contraire.

### Exemple 1

On prépare un mélange aqueux contenant les ingrédients suivants dans les proportions indiquées en %:

| | |
|---|---|
| lait entier | 90,46 |
| saccharose vanillé | 6,67 |
| amidon de pomme de terre natif à 85% de matière sèche et 23% d'amylose | 2,67 |
| colorant jaune alimentaire | 0,13 |
| calcium stearoyl-lactyl-2-lactate | 0,07 |

L'émulsifiant a été mis en dispersion au préalable dans une partie du lait à pH 6,0 et à 45°C, puis ajouté au mélange.

On porte la température du mélange à 95°C tout en brassant. On maintient la température à 95°C durant 20 -30 min tout en brassant.

Au cours de cette opération, on réalise simultanément la gélatinisation de l'amidon et la complexation de l'amylose libérée. Les conditions de cette opération permettent d'une part de libérer une quantité d'amylose telle que l'amidon présente un pouvoir de liaison de l'iode de 3,63%, et d'autre part de complexer cette amylose avec l'émulsifiant de manière que l'amidon présente un degré de complexation de 100%.

On fait prendre le mélange par refroidissement à 5°C, sans brasser. Le gel alimentaire, autrement dit le pudding à la vanille obtenu présente un module conservatif G' de 22 Nm⁻², un module dissipatif G'' de 5 Nm⁻² et un pH de 6,5. Il se distingue par une texture en bouche à la fois fondante et croquante mais absolument pas collante, autrement dit une texture mi-solide courte.

A titre de comparaison, un pudding à la vanille préparé de manière semblable mais sans addition d'émulsifiant présente une texture longue et fluide, un module conservatif G' de 3,2 Nm⁻² et un module dissipatif G'' de 3,4 Nm⁻².

### Exemple 2

On prépare un mélange aqueux contenant les ingrédients suivants dans les proportions indiquées en %:

| | |
|---|---|
| eau | 80,22 |
| crème à 35% de matière grasse | 7,89 |
| saccharose | 6,67 |
| amidon de pomme de terre à 88,5% de matière sèche et 23% d'amylose, traité à la chaleur et à l'humidité* | 2,76 |
| lait écrémé en poudre | 2,10 |
| glycerol monostearate | 0,05 |
| calcium stearoyl-lactyl-2-lactate | 0,05 |
| colorant jaune alimentaire | 0,13 |
| extrait de vanille | 0,13 |

| | |
|---|---|
| * l'amidon a été humidifié à 20% d'eau, traité durant 4 h à 95°C dans un récipient fermé, séché à l'air et broyé. | |

Les émulsifiants ont été mis en dispersion au préalable séparément, dans une partie d'eau à pH à 6,5 et 67°C pour le glycerol monostearate et dans une partie d'eau à pH 6,0 et 45°C pour le calcium stearyl-lactyl-2-lactate. Ils ont été ensuite ajoutés au mélange.

On met le mélange en boîtes de fer blanc laquées de 0,5 litre que l'on scelle. On place les boîtes dans une autoclave tournant à 0,2 tours/min et on les y laisse 30 min à 121°C, la température de la solution montant de 25 à 121°C au cours des 10 premières minutes.

Au cours de cette opération, on réalise simultanément la gélatinisation de l'amidon et la complexation de l'amylose libérée. Les conditions de cette opération permettent d'une part de libérer une quantité d'amylose telle que l'amidon présente un pouvoir de liaison de l'iode de 4,32%, et d'autre part de complexer cette amylose avec l'émulsifiant de manière que l'amidon présente un degré de complexation de 100%.

On fait prendre le mélange par refroidissement à l'eau froide dans l'autoclave jusqu'à 25°C. Cette opération prend environ 30 min. On stoppe la rotation de l'autoclave 10 min après le début du refroidissement.

Le gel alimentaire, autrement dit le pudding à la vanille stérilisé obtenu présente un module conservatif G' de 20 Nm⁻², un module dissipatif G'' de 5 Nm⁻² et un pH de 6,5. Il se distingue par une texture mi-solide courte.

A titre de comparaison, un pudding à la vanille stérilisé de manière semblable mais sans addition d'émulsifiant présente une texture longue et fluide, un module conservatif G' de 1,5 Nm⁻² et un module dissipatif G'' de 1,6 Nm⁻².

### Exemple 3

On prépare un mélange aqueux contenant les ingrédients suivants dans les proportions indiquées en %:

| | |
|---|---|
| amidon de pomme de terre prégélatinisé du commerce,à 93% de matière sèche et 23% d'amylose | 2,88 |
| calcium stearoyl-lactyl-2-lactate enrobant l'amidon* | 0,12 |
| saccharose | 6,0 |
| saccharose vanillé | 2,0 |
| poudre de cacao | 4,0 |
| lait écrémé en poudre | 10,0 |
| eau | 75,0 |

| | |
|---|---|
| * l'amidon prégélatinisé a été enrobé par pulvérisation d'une solution alcoolique de l'émulsifiant, puis séché à l'air à 40°C. | |

Les conditions de gélatinisation préalable de l'amidon ont permis de libérer une quantité d'amylose telle qu'il présente un pouvoir de liaison de l'iode de 4,65%.

Pour préparer ledit mélange, les ingrédients secs sont dispersés délicatement dans l'eau. On porte ensuite le mélange à 98°C tout en brassant. On maintient la température à 98°C durant 5 min tout en brassant délicatement.

Au cours de cette opération, on complexe l'amylose de manière telle que l'amidon présente un degré de complexation de 100%.

On fait prendre le mélange par refroidissement à 5°C, sans brasser. Le gel alimentaire, autrement dit le pudding au chocolat obtenu présente un module conservatif G' de 30 Nm⁻², un module dissipatif G'' de 8 Nm⁻², et un pH de 6,6. Il se distingue par une texture mi-solide particulièrement courte.

A titre de comparaison, un pudding au chocolat obtenu de manière semblable mais sans addition d'émulsifiant présente une texture longue et moins ferme, un module conservatif G' de 1,4 Nm⁻² et un module dissipatif G'' de 3,1 Nm⁻².

### Exemple 4

On prépare un mélange aqueux contenant les ingrédients suivants dans les proportions indiquées en %:

| | |
|---|---|
| amidon de tapioca à 88,7% de matière sèche et 18% d'amylose | 3,38 |
| polyoxyethylene-sorbitane-monostearate | 0,21 |
| cyclamate | 0,082 |
| saccharine | 0,008 |
| acide citrique | 0,30 |
| colorant jaune alimentaire | 0,15 |
| eau | 95,72 |

Pour préparer ce mélange, on met l'amidon en suspension dans l'eau et on le gélatinise durant 30 min à 95°C tout en brassant avec précaution. On obtient une solution d'amidon dans laquelle la quantité d'amylose libérée des granules est telle qu'il présente un pouvoir de liaison de l'iode de 4,15%.

On ajoute le reste des ingrédients du mélange à la solution d'amidon à 95°C et l'on brasse le mélange énergiquement durant 15 s. On complexe ainsi l'amylose libérée avec l'émulsifiant, de sorte que l'amidon présente un degré de complexation de 100%.

On fait prendre le mélange par refroidissement à 25°C, sans brasser. Le gel au citron obtenu présente un module conservatif G' de 12 Nm ⁻², un module dissipatif G'' de 3 Nm⁻², et un pH de 2,5. Il se distingue par une texture de gel courte bien typée.

A titre de comparaison, un produit préparé de manière semblable mais sans addition d'émulsifiant ne prend pas, reste liquide et ne présente pas une texture de gel. Son module conservatif G' est de 0,8 Nm⁻² et son module dissipatif G'' est de 1,2 Nm⁻².

## Revendications

1. Gel, caractérisé par le fait qu'il contient 1-5% en poids d'amidon présentant une teneur notable en amylose complexé à un degré de 90-100% avec 1-8%, sur poids d'amidon, d'un émulsifiant susceptible de former un complexe avec l'amylose, et il présente un module conservatif G' de 5-50 Nm⁻² ainsi qu'un module dissipatif G'' de 1-10 Nm⁻².

2. Gel selon la revendication 1, dans lequel ledit amidon est un amidon de pomme de terre, tapioca, maïs et/ou blé, et ledit émulsifiant est le glycerol monostearate, le calcium stearoyl-lactyl-2-lactate, le sodium stearoyl-lactyl-2-lactate, le polyoxyethylene-sorbitane-monostearate et/ou le polyethylene glycol-monolaurate.

3. Gel, alimentaire, selon la revendication 1, contenant, en plus dudit amidon complexé, des solides du lait, du saccharose et des matières et/ou agents aromatisant et/ou colorant.

4. Procédé de préparation d'un gel selon l'une des revendications 1-3, dans lequel on prépare un mélange aqueux contenant tous les ingrédients devant entrer dans la composition du gel, dont ledit émulsifiant en dispersion et ledit amidon gélatinisé dans des conditions permettant de libérer une quantité d'amylose telle qu'il présente un pouvoir de liaison de l'iode de 3,3-4,7%, on complexe à chaud cette amylose avec l'émulsifiant, et l'on fait prendre le mélange par refroidissement.

5. Procédé selon la revendication 4, dans lequel on prépare ledit mélange en y ajoutant l'amidon sous forme native, prégélatinisée, ou prétraitée à la chaleur et à l'humidité.

6. Procédé selon la revendication 4, dans lequel on gélatinise l'amidon à 90-125°C durant 2-30 min.

7. Procédé selon la revendication 4, dans lequel on complexe l'amylose avec l'émulsifiant à 70-125°C durant 15 s - 30 min.

## Claims

1. A gel, characterized in that it contains 1 to 5% by weight of starch having a Significant content of amylose complexed to a degree of 90 to 100% with 1 to 8%, based on the weight of the starch, of an emulsifier capable of forming a complex with amylose and has a conservation modulus G' of 5 to 50 Nm⁻² and a dissipation modulus G'' of 1 to 10 Nm⁻².

2. A gel as claimed in claim 1, in which the starch is a potato starch, tapioca starch, cornstarch and/or wheat starch and the emulsifier is glycerol monostearate, calcium stearoyl lactyl-2-lactate, sodium stearoyl lactyl-2-lactate, polyoxyethylene sorbitan monostearate and/or polyethylene glycol monolaurate.

3. A food gel as claimed in claim 1 which, in addition to the complexed starch, contains milk solids, sucrose and/or flavouring and/or colouring materials and/or agents.

4. A process for the production of the gel claimed in any of claims 1 to 3, in which an aqueous mixture containing all the ingredients entering into the composition of the gel, including the emulsifier in dispersed form and the starch in gelatinized form, is prepared under conditions which enable amylose to be released in such a quantity that it has an iodine binding power of 3.3 to 4.7%, the amylose produced is complexed with the emulsifier by heating and the mixture is set by cooling.

5. A process as claimed in claim 4, in which-the mixture is prepared by adding the starch in pregelatinized native form or pretreated by exposure to heat and moisture.

6. A process as claimed in claim 4, in which the starch is gelatinized for 2 to 30 minutes at 90 to 125°C.

7. A process as claimed in claim 4, in which the amylose is complexed with the emulsifier for 15 s to 30 mins. at 70 to 125°C.

## Patentansprüche

1. Gel, dadurch gekennzeichnet, daß es 1 bis 5 Gew.-% Stärke enthält, welche einen erheblichen Gehalt an Amylose aufweist, die in einem Ausmaß von 90 bis 100 % mit 1 bis 8 %, bezogen auf das Gewicht der Stärke, eines Emulgators komplexiert ist, welcher befähigt ist, mit der Amylose einen Komplex zu bilden; und daß es einen Erhaltungsmodul G' von 5 bis 50 N/m² sowie einen Dissipationsmodul G'' von 1 bis 10 N/m² aufweist.

2. Gel nach Anspruch 1, worin die Stärke eine Kartoffel-, Tapioka-, Mais- und/oder Getreidestärke ist und worin der Emulgator Glycerinmonostearat, Calciumstearoyl-lactyl-2-lactat, Natriumstearoyl-lactyl-2-lactat, Polyoxyethylensorbitanmonostearat und/oder Polyethylenglykolmonolaurat ist.

3. Nahrungsgel nach Anspruch 1, welches außer der komplexierten Stärke Milchfeststoffe, Saccharose sowie Geschmacks- und/oder Aromastoffe und/oder Färbemittel enthält.

4. Verfahren zur Herstellung eines Gels nach einem der Ansprüche 1 bis 3, wobei ein wäßriges Gemisch hergestellt wird, das alle Bestandteile enthält, die in die Zusammensetzung des Gels eingebracht werden sollen, wobei der in Dispersion befindliche Emulgator und die gelierte Stärke unter Bedingungen vorliegen, welche die Freisetzung einer solchen Amylosemenge zulassen, daß das Gemisch ein Iodbindungsvermögen von 3,3 bis 4,7 % aufweist; und wobei diese Amylose mit dem Emulgator unter Wärmeeinwirkung komplexiert wird, und wobei man das Gemisch durch Abkühlen erstarren läßt.

5. Verfahren nach Anspruch 4, wobei dieses Gemisch dadurch hergestellt wird, daß man die Stärke in ihrer natürlich vorkommenden Form, in einer vorgelierten Form oder in einer durch Wärme- und Feuchtigkeitseinwirkung vorbehandelten Form zugibt.

6. Verfahren nach Anspruch 4, wobei die Stärke während 2 bis 30 min bei 90 bis 125°C geliert wird.

7. Verfahren nach Anspruch 4, wobei die Amylose mit dem Emulgator während 15 s bis 30 min bei 70 bis 125°C komplexiert wird.
